# EUROPEAN PATENT SPECIFICATION

(11) **EP 4 419 307 B1**
(45) Date of publication and mention of the grant of the patent: **16.07.2025**
(21) Application number: 22800699.5
(22) Date of filing: 17.10.2022
(51) Int. Cl.: B29C 49/02, B29B 11/12, B29C 43/02, B29C 49/00, B29C 43/34, B29L 31/00

(54) **CUP-SHAPED BODY AND METHOD FOR MANUFACTURING A CUP-SHAPED BODY**
BECHERFÖRMIGER KÖRPER UND VERFAHREN ZUR HERSTELLUNG EINES BECHERFÖRMIGEN KÖRPERS
CORPS EN FORME DE COUPELLE ET PROCÉDÉ DE FABRICATION D'UN CORPS EN FORME DE COUPELLE

(30) Priority: 19.10.2021 IT 202100026756; 19.10.2021 IT 202100026738
(43) Date of publication of application: 28.08.2024
(73) Proprietor: Sacmi Imola S.C., 40026 Imola (IT)
(72) Inventor: DI GIACOMO, Alberto, 40026 Imola (IT); PUCCI, Fabrizio, 40023 Castel Guelfo di Bologna (IT); PARRINELLO, Fiorenzo, 40059 Medicina (IT)
(74) Representative: Modiano, Micaela Nadia
(86) International application number: PCT/EP2022/078847
(87) International publication number: WO 2023/066868

(56) References cited:
- WO-A1-2020/121190
- JP-B2- 3 436 144
- US-A- 5 507 998
- US-A1- 2002 088 767
- US-A1- 2007 090 118
- US-A1- 2008 050 546

## Description

The present invention relates to a cup-shaped body made of polymeric material, for the production of containers, and a method for manufacturing cup-shaped bodies.

In particular, the present invention relates to a cup-shaped body of the type produced using compression molding, and has a longitudinally extended body, extending between a mouth and a bottom wall, which has substantially a frustum-shaped surface.

Cup-shaped bodies are known, for example so-called "preforms", in many cases obtained by injection molding, which have a preform body that extends substantially for the whole longitudinal extension between the mouth and the bottom wall.

For example, US 2008/050546 A1 and WO2005049434 disclose preforms that comprises a preform body and a convex hemispherical bottom.

The preform body has a conical shape that widens toward a cylindrical neck, which is surrounded by a flange that ends with a thickened rim.

Specifically, the angle with which the internal surface of the preform body widens toward the cylindrical neck is greater than the angle with which the external surface of the preform body opens upward, while the thickness of the cylindrical part is less than the thickness of the bottom.

In many applications it is important to successfully obtain cup-shaped bodies, and, in special preforms, with a fairly accentuated taper, for example greater than 90°, and in some cases greater than 100°.

However, especially if it is desired, in order to reduce weight and cost, to keep thickness very low, and in particular if it is desired to produce cup-shaped bodies, and specifically preforms, using compression molding, then some problems arise in managing the flow of material inside the mold, which must be brought from the bottom to the mouth.

In fact, as is known, the molding force F of a molded product is a function of the projected area (Ap) and of the molding pressure (P): (F = Ap*P).

The projected area depends on the diameter of the object.

The molding force therefore depends on P, which in turn depends on the characteristics of the fluid (viscosity µ), on the geometric characteristics (thickness s, cross-section S of the flow passage, length L traveled by the plastic) and on the plastic flow rate Q: P = f (µ, s, L, Q).

In general, if the other conditions remain unchanged, the pressure P increases with:
- an increase in the viscosity;
- an increase in the length of the path L;
- a decrease in the thickness s of the cross-section S of the fill flow passage;
- a decrease in the cross-section S of the fill flow passage;
- an increase in the flow rate;

By contrast, the pressure P decreases with:
- a decrease in the viscosity;
- a decrease in the length of the path L;
- an increase in the thickness s of the cross-section S of the fill flow passage;
- an increase in the cross-section S of the fill flow passage;
- a decrease in the flow rate.

As a consequence, most of the known solutions, although valid from a purely theoretical point of view, are problematic to implement and as a result they do not ensure a result that meets the expectations of the sector.

In fact, if it is desired to produce cup-shaped bodies with an extremely slim final thickness using compression molding, then generally extremely high operating pressures are produced and this results in very complex management of the process and the risk that the fluid will unevenly occupy the space defined between the mold and the male plug.

The aim of the present invention is to provide a cup-shaped body, and a method for manufacturing a cup-shaped body, that are capable of improving the known art in one or more of the above mentioned aspects.

Within this aim, an object of the invention is to make available a method for manufacturing a cup-shaped body that uses compression molding but makes it possible to obtain cup-shaped bodies with extremely varied degrees of taper.

Another object of the invention is to provide a cup-shaped body, and a method for manufacturing a cup-shaped body, that are highly reliable, easy to implement and of low cost.

This aim and these and other objects which will become better apparent hereinafter are achieved by a cup-shaped body, and by a method for manufacturing a cup-shaped body, according to the independent claims, optionally provided with one or more characteristics of the dependent claims.

Further characteristics and advantages of the invention will become better apparent from the description of some preferred, but not exclusive, embodiments of the cup-shaped body, and of a method for manufacturing a cup-shaped body, according to the invention, which are illustrated by way of non-limiting example in the accompanying drawings wherein:
Figure 1 is a cross-sectional view of a first embodiment of the cup-shaped body according to the invention;
Figure 2 is a cross-sectional view of a second embodiment of the cup-shaped body according to the invention;
Figure 3 is a cross-sectional view of a third embodiment of the cup-shaped body according to the invention;
Figure 4 is a cross-sectional view of a fourth embodiment of the cup-shaped body according to the invention;
Figure 5 is a cross-sectional view of a fifth embodiment of the cup-shaped body according to the invention;
Figure 6 is a cross-sectional view of a sixth embodiment of the cup-shaped body according to the invention;
Figure 7 is a cross-sectional view of a seventh embodiment of the cup-shaped body according to the invention;
Figure 8 is a cross-sectional view of an eighth embodiment of the cup-shaped body according to the invention;
Figure 9 is a cross-sectional view of a ninth embodiment of the cup-shaped body according to the invention;
Figure 10 is a cross-sectional view of a tenth embodiment of the cup-shaped body according to the invention;
Figure 11 is a cross-sectional view of an eleventh embodiment of the cup-shaped body according to the invention;
Figure 12 is a schematic cross-sectional view of the mold for producing the cup-shaped body in the open condition;
Figure 13 is a schematic cross-sectional view of the mold for producing the cup-shaped body in the partially open condition;
Figure 14 is a cross-sectional view similar to that of Figures 12 and 13, with the mold in the closed condition.

With reference to the figures, the cup-shaped body according to the invention, generally designated by the reference numeral 1, is of the type obtained via compression molding of a polymeric material.

Preferably, as described below and shown in the accompanying figures, the cup-shaped body 1 comprises, for example, a so-called "preform" of the type used for the production of plastic containers.

The cup-shaped body 1 has an axis of longitudinal extension 100 and defines a mouth 2 and a longitudinally extended body 3.

The longitudinally extended body 3 is closed at the opposite end 3a from the mouth 2.

The longitudinally extended body 3 has a conical or frustum-shaped extension with a diameter that increases progressively from the opposite end 3a toward the mouth 2.

The cup-shaped body 1 has a height extension H measured between the mouth 2 and the opposite end 3a, while the mouth 2 has a circular shape of diameter D.

According to the present invention:
- the ratio between H and D is comprised between 0.35 and 1.65; and
- the ratio between D, measured in millimeters, and the average taper (Cmedia), measured in degrees (°), D/Cmedia, is comprised between 0.5 and 1.

By "average taper" is meant the arithmetic mean between the taper (angle α) of the external surface 13a of the longitudinally extended body 3 and the taper (angle β) of the internal surface 13b of the longitudinally extended body 3.

With reference to a first particularly important aspect, the present invention relates to a cup-shaped body 1 which has a diameter D that is appreciably greater than the height H, and therefore to rather squat cup-shaped bodies 1.

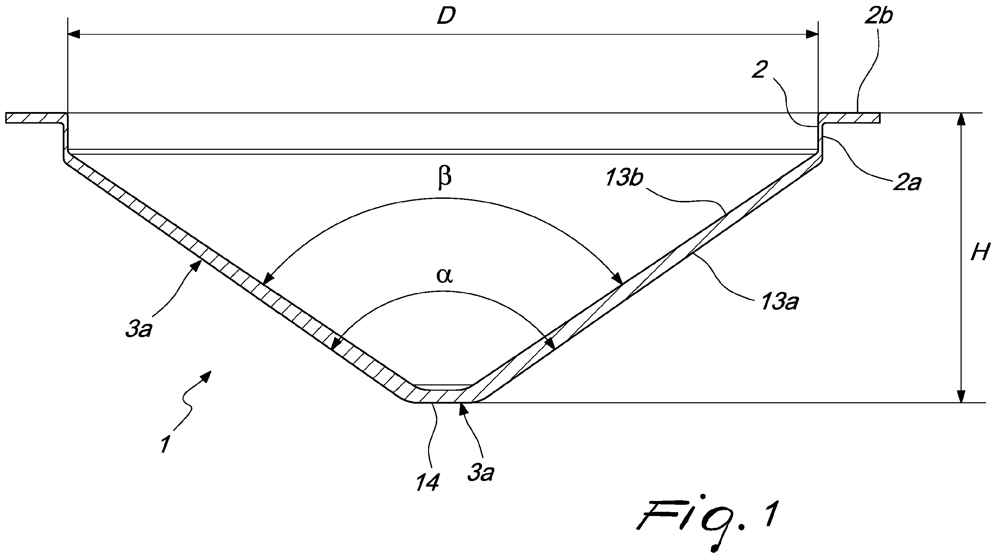

With reference to such type of cup-shaped bodies 1, shown in Figures 1 to 5 and 7 to 8:
- the ratio between H and D is comprised between 0.36 and 0.40; and
- the ratio between D, measured in millimeters, and the average taper (Cmedia), measured in degrees (°), D/Cmedia, is comprised between 0.5 and 0.9.

It has been found to be extremely advantageous to have the ratio between H and D be comprised between 0.37 and 0.39, and to have the D/Cmedia ratio be comprised between 0.54 and 0.80.

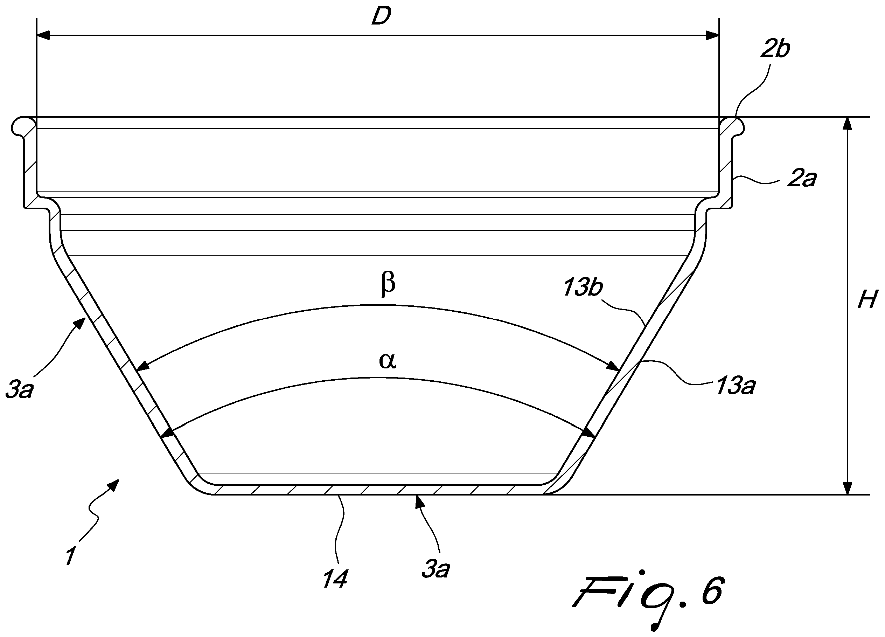

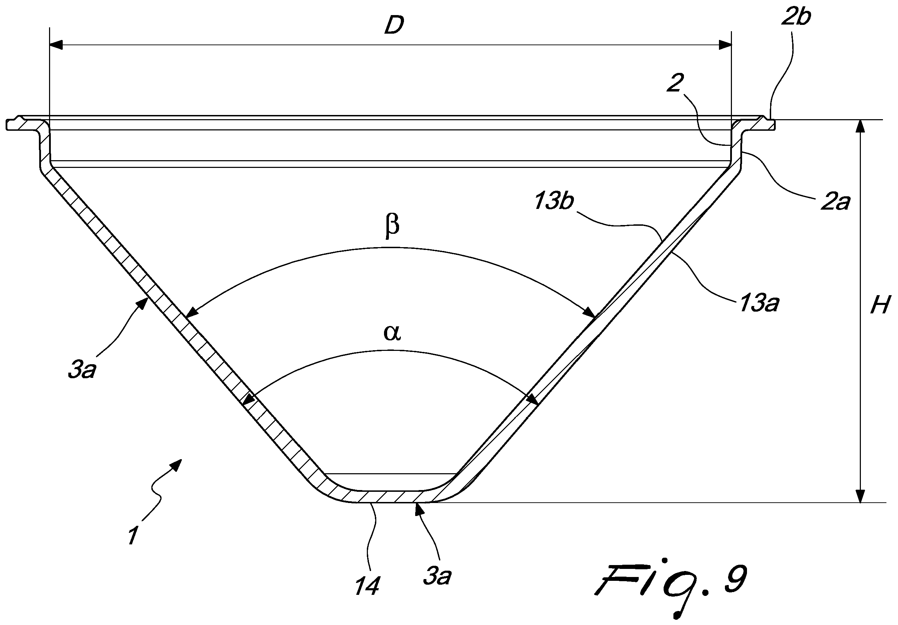

According to a further aspect of the present invention, the cup-shaped body 1, as shown in the examples given in Figure 6 and in Figures 9 to 10, has the following characteristics:
- the ratio between H and D is comprised between 0.50 and 0.70; and
- the ratio between D, measured in millimeters, and the average taper (Cmedia), measured in degrees (°), D/Cmedia, is comprised between 0.6 and 0.95.

It has been found to be extremely advantageous to have the ratio between H and D be comprised between 0.53 and 0.67, and to have the D/Cmedia ratio be comprised between 0.65 and 0.90.

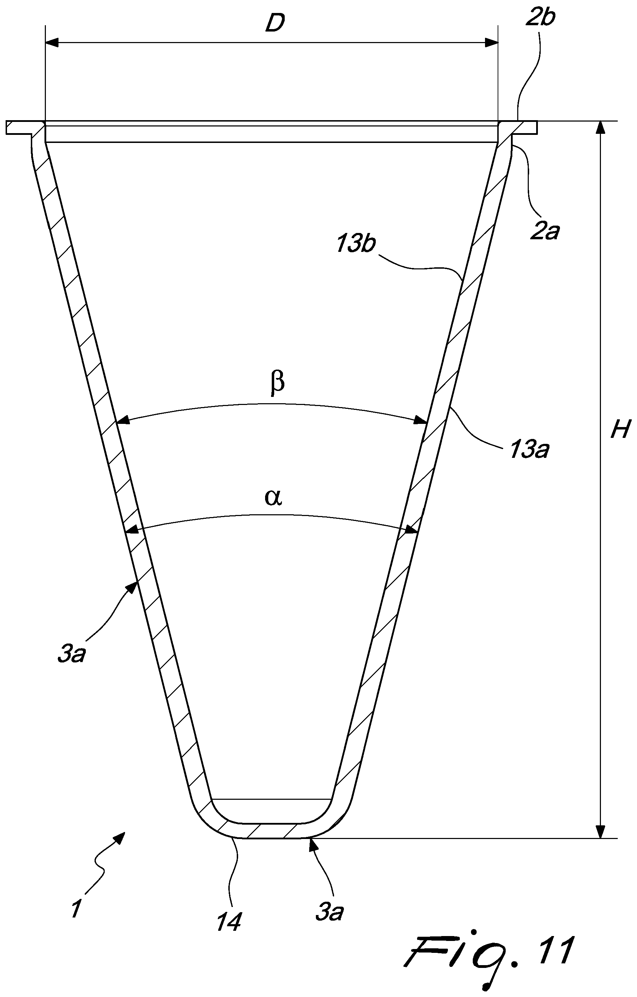

According to a further aspect of the present invention, the cup-shaped body 1, as shown in Figure 11, has the following characteristics:
- the ratio between H and D is comprised between 1.4 and 1.7; and
- the ratio between D, measured in millimeters, and the average taper (Cmedia), measured in degrees (°), D/Cmedia, is comprised between 0.9 and 1.

It has been found to be extremely advantageous to have the ratio between H and D be comprised between 1.45 and 1.65, and to have the D/Cmedia ratio be comprised between 0.94 and 0.96.

Conveniently, the weight in grams of the preform 1 is comprised between 4 g and 9 g.

Advantageously, the weight in grams of the preform 1 is comprised between 5.5 g and 9 g.

More preferably, the weight in grams of the preform 1 is comprised between 5.9 g and 6.7 g.

Conveniently, the cup-shaped body 1 comprises, at the mouth 2, a neck portion 2a which is radiused to a flanged portion 2b.

In particular, the flanged portion 2b extends outward on a plane that is perpendicular with respect to the plane of arrangement of the neck portion 2a.

The cup-shaped body 1, at the opposite end 3a, has a flat or rounded closing wall 14.

The thickness of the closing wall 14 is comprised between 0.5 mm and 1.2 mm, preferably between 0.8 mm and 1 mm.

Conveniently, the thickness of the longitudinally-extended body 3 that has a conical extension is comprised between 0.6 mm and 1.5 mm, preferably between 0.66 and 1.44 mm.

The cup-shaped body 1 can be both of the conventional type, i.e. single-layer, and of the multi-layer type, i.e. comprising at least one layer of barrier material interposed between two layers of main material.

The barrier material can have properties as a barrier to oxygen and/or to light, while the main material gives the preform the desired mechanical and aesthetic properties.

According to a first embodiment shown in Figure 1, the cup-shaped body 1 has a weight comprised between 6 g and 6.1 g; the diameter of the mouth 2 is comprised between 60 mm and 63 mm, while the diameter of the lower end of the frustum-shaped region is comprised between 7 mm and 8 mm.

The height H is comprised between 22 and 25 mm. The thickness of the flanged portion 2b is comprised between 0.7 mm and 0.9 mm and the thickness of the neck portion 2a is comprised between 0.3 mm and 0.4 mm.

The thickness of the longitudinally-extended body 3 in the conical or frustum-shaped region varies from a minimum, in the upper part, comprised between 0.6 and 0.7 mm and a maximum, in the lower part, comprised between 1.4 and 1.5 mm.

The thickness of the closing wall 14 is comprised between 0.9 mm and 1 mm.

The taper of the external surface 13a (angle α) of the longitudinally extended body 3 is comprised between 111° and 112° while the taper of the internal surface 13b (angle β) of the longitudinally extended body 3 is comprised between 109° and 110°.

Between the neck portion 2a and the flanged portion 2b, there is an angle equal to 90°.

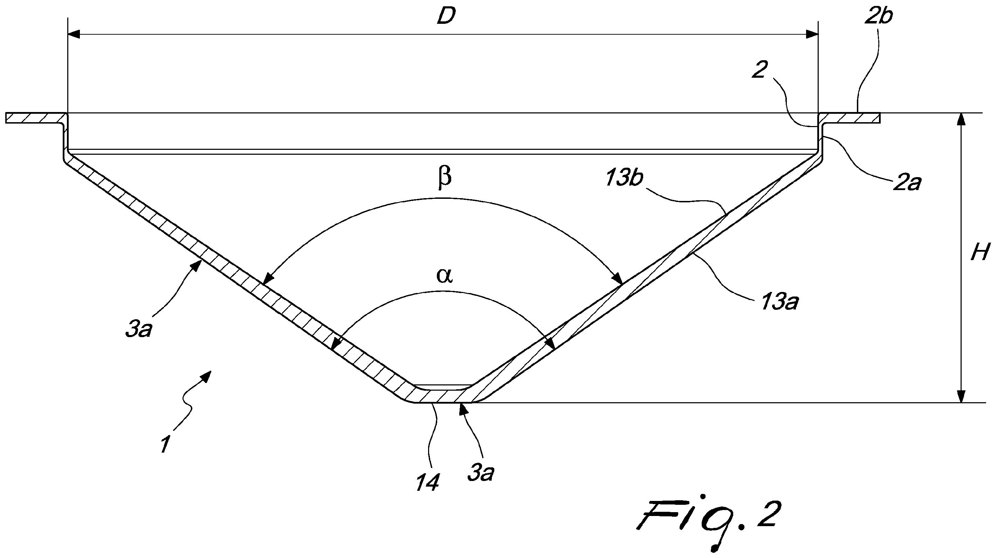

According to a second embodiment shown in Figure 2, the cup-shaped body 1 has a weight comprised between 6.2 g and 6.3 g; the diameter of the mouth 2 is comprised between 60 mm and 63 mm, while the diameter of the lower end of the frustum-shaped region is comprised between 7 mm and 8 mm.

The height H is comprised between 22 and 25 mm. The thickness of the flanged portion 2b is comprised between 0.7 mm and 0.9 mm and the thickness of the neck portion 2a is comprised between 0.6 mm and 0.7 mm.

The thickness of the longitudinally extended body 3 in the conical or frustum-shaped region varies from a minimum, in the upper part, comprised between 0.6 and 0.7 mm and a maximum, in the lower part, comprised between 1.4 and 1.5 mm.

The thickness of the closing wall 14 is comprised between 0.9 mm and 1 mm.

The taper of the external surface 13a (angle α) of the longitudinally extended body 3 is comprised between 111° and 112° while the taper of the internal surface 13b (angle β) of the longitudinally extended body 3 is comprised between 109° and 110°.

Between the neck portion 2a and the flanged portion 2b, there is an angle equal to 90°.

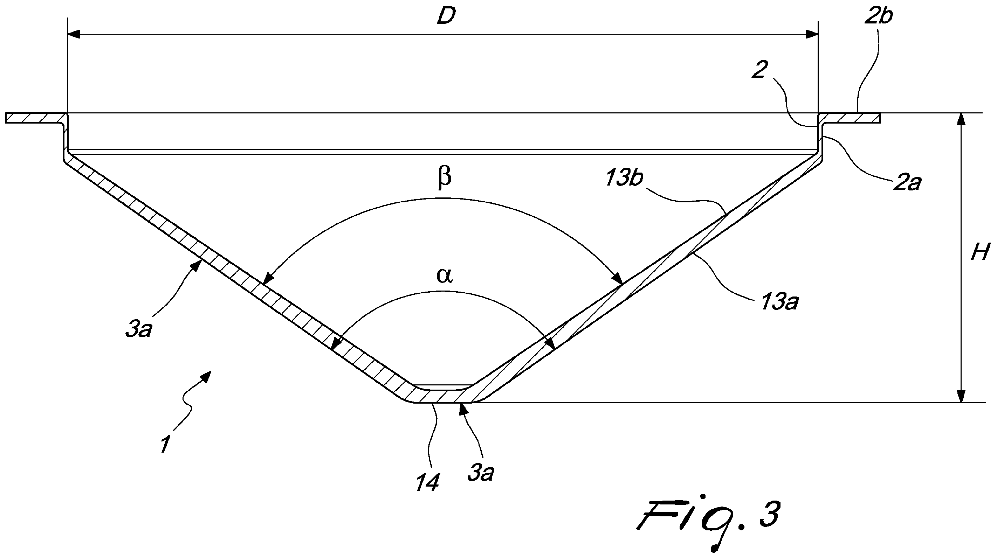

According to a third embodiment shown in cross-section in Figure 3, the cup-shaped body 1 has a weight comprised between 6.5 g and 6.6 g; the diameter of the mouth 2 is comprised between 60 mm and 63 mm, while the diameter of the lower end of the frustum-shaped region is comprised between 7 mm and 8 mm.

The height H is comprised between 22 and 25 mm. The thickness of the flanged portion 2b is comprised between 0.7 mm and 0.9 mm and the thickness of the neck portion 2a is comprised between 0.9 mm and 1 mm.

The thickness of the longitudinally extended body 3 in the conical or frustum-shaped region varies from a minimum, in the upper part, comprised between 0.6 and 0.7 mm and a maximum, in the lower part, comprised between 1.4 and 1.5 mm.

The thickness of the closing wall 14 is comprised between 0.9 mm and 1 mm.

The taper of the external surface 13a (angle α) of the longitudinally extended body 3 is comprised between 111° and 112° while the taper of the internal surface 13b (angle β) of the longitudinally extended body 3 is comprised between 109° and 110°.

Between the neck portion 2a and the flanged portion 2b, there is an angle equal to 90°.

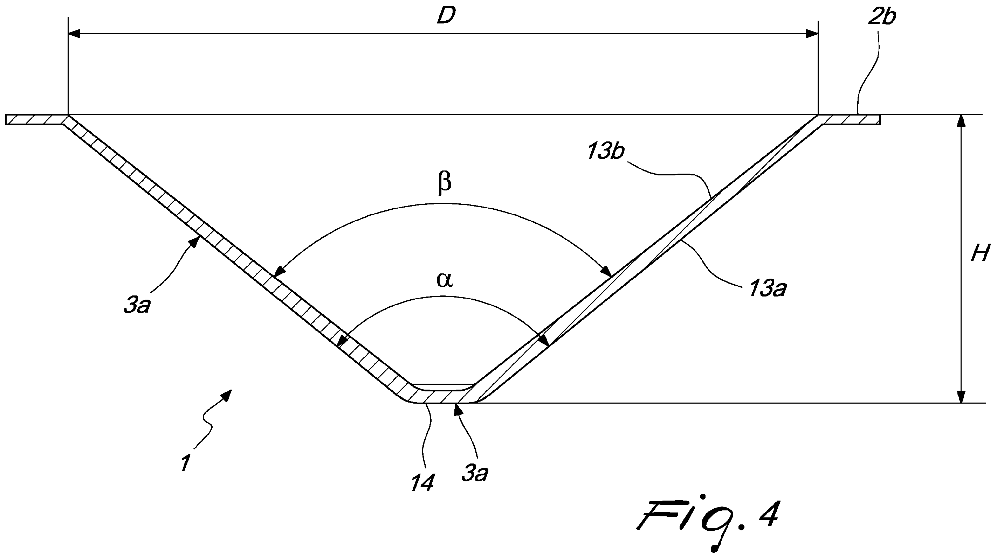

According to a fourth embodiment shown in cross-section in Figure 4, the cup-shaped body 1 has a weight comprised between 5.9 g and 6.2 g; the diameter of the mouth 2 is comprised between 60 mm and 63 mm, while the diameter of the lower end of the frustum-shaped region is comprised between 7 mm and 8 mm.

The height H is comprised between 22 and 25 mm. The thickness of the flanged portion 2b is comprised between 0.7 mm and 0.9 mm and the thickness of the neck portion 2a is comprised between 0.9 mm and 1 mm.

The thickness of the longitudinally extended body 3 in the conical or frustum-shaped region varies from a minimum, in the upper part, comprised between 0.65 and 0.75 mm and a maximum, in the lower part, comprised between 1.35 and 1.45 mm.

The taper of the external surface 13a (angle α) of the longitudinally extended body 3 is comprised between 100° and 103° while the taper of the internal surface 13b (angle β) of the longitudinally extended body 3 is comprised between 103° and 104°.

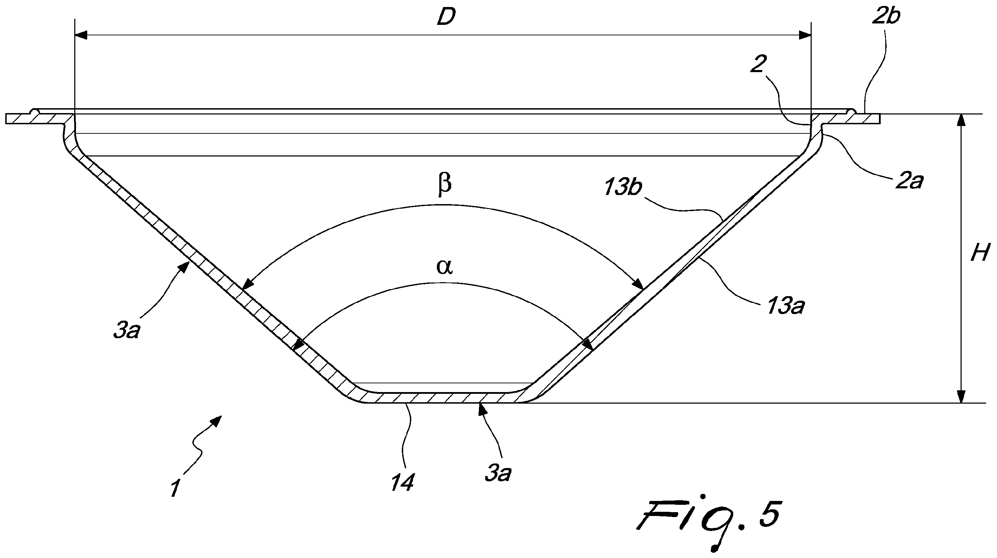

According to a fifth embodiment shown in cross-section in Figure 5, the cup-shaped body 1 has a weight comprised between 6.3 g and 6.5 g; the diameter of the mouth 2 is comprised between 59 mm and 62 mm, while the diameter of the lower end of the frustum-shaped region is comprised between 17 mm and 18 mm.

The height H is comprised between 22 and 25 mm. The thickness of the flanged portion 2b is comprised between 0.7 mm and 1.2 mm and the thickness of the neck portion 2a is comprised between 0.9 mm and 1 mm.

The thickness of the preform body 3 in the conical or frustum-shaped region varies extending longitudinally from a minimum, in the upper part, comprised between 0.65 and 0.75 mm and a maximum, in the lower part, comprised between 1.1 and 1.3 mm.

The thickness of the closing wall 14 is comprised between 0.7 mm and 0.9 mm.

The taper of the external surface 13a (angle α) of the longitudinally extended body 3 is comprised between 96.5° and 97.5° while the taper of the internal surface 13b (angle β) of the longitudinally extended body 3 is comprised between 98.5° and 99.5°.

Between the neck portion 2a and the flanged portion 2b, there is an angle comprised between 83° and 85°.

According to a sixth embodiment shown in cross-section in Figure 6, the cup-shaped body 1 has a weight comprised between 7.6 g and 8.6 g; the diameter of the mouth 2 is comprised between 55 mm and 57 mm, while the diameter of the lower end of the frustum-shaped region is comprised between 26 mm and 27 mm.

The height H is comprised between 29 and 33 mm. The thickness of the flanged portion 2b is comprised between 0.9 mm and 1 mm and the thickness of the neck portion 2a is comprised between 0.8 mm and 1 mm .

The thickness of the longitudinally extended body 3 in the conical or frustum-shaped region varies from a minimum, in the upper part, comprised between 0.8 and 1 mm and a maximum, in the lower part, comprised between 1.05 and 1.15 mm.

The thickness of the closing wall 14 is comprised between 0.7 mm and 0.9 mm.

The taper of the external surface 13a (angle α) of the longitudinally extended body 3 is comprised between 61° and 62° while the taper of the internal surface 13b (angle β) of the longitudinally extended body 3 is comprised between 61° and 162°.

Between the neck portion 2a and the flanged portion 2b, there is an angle equal to 90°.

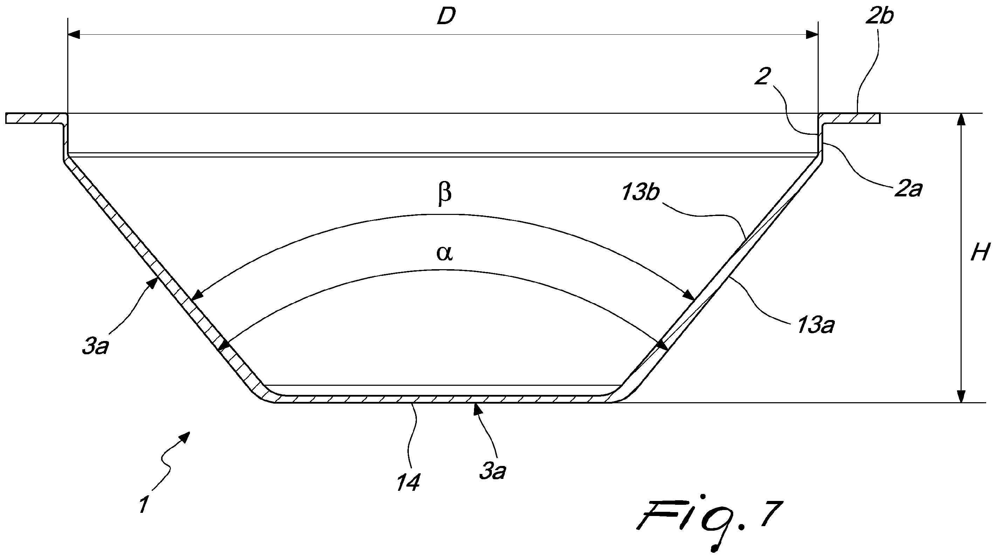

According to a seventh embodiment shown in cross-section in Figure 7, the cup-shaped body 1 has a weight comprised between 5.9 g and 6.1 g; the diameter of the mouth 2 is comprised between 60 mm and 63 mm, while the diameter of the lower end of the frustum-shaped region is comprised between 28 mm and 32 mm.

The height H is comprised between 22 and 25 mm. The thickness of the flanged portion 2b is comprised between 0.7 mm and 0.9 mm and the thickness of the neck portion 2a is comprised between 0.3 mm and 0.4 mm.

The thickness of the longitudinally extended body 3 in the conical or frustum-shaped region varies from a minimum, in the upper part, comprised between 0.6 and 0.65 mm and a maximum, in the lower part, comprised between 1.05 and 1.15 mm.

The thickness of the closing wall 14 is comprised between 0.5 mm and 0.6 mm.

The taper of the external surface 13a (angle α) of the longitudinally extended body 3 is comprised between 78° and 80° while the taper of the internal surface 13b (angle β) of the longitudinally extended body 3 is comprised between 80° and 82°.

Between the neck portion 2a and the flanged portion 2b, there is an angle equal to 90°.

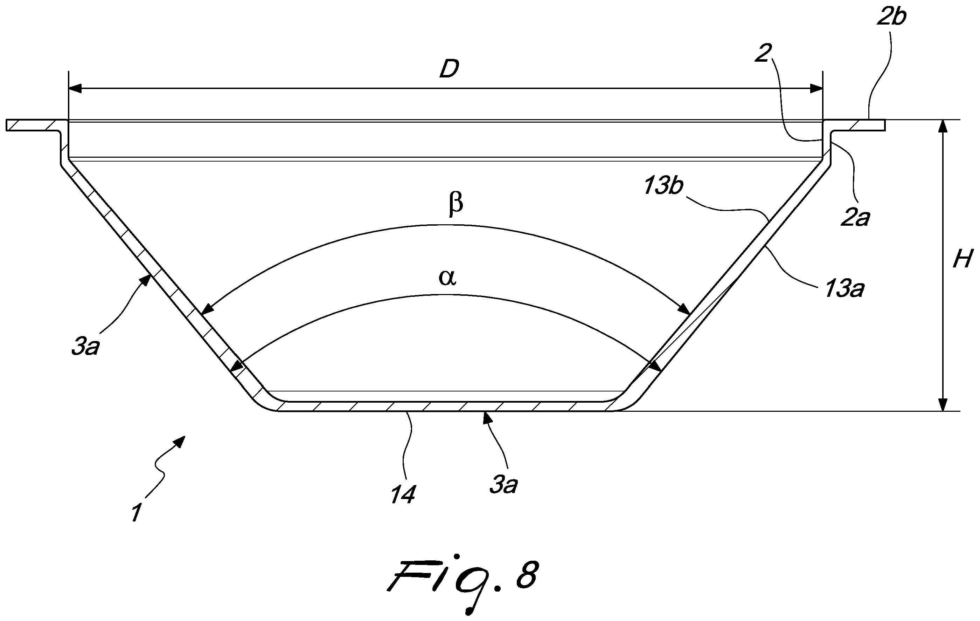

According to an eighth embodiment shown in cross-section in Figure 8, the cup-shaped body 1 has a weight comprised between 7.3 g and 7.8 g; the diameter of the mouth 2 is comprised between 60 mm and 63 mm, while the diameter of the lower end of the frustum-shaped region is comprised between 28 mm and 32 mm.

The height H is comprised between 23 and 25 mm. The thickness of the flanged portion 2b is comprised between 0.8 mm and 1 mm and the thickness of the neck portion 2a is comprised between 0.6 mm and 0.7 mm.

The thickness of the longitudinally extended body 3 in the conical or frustum-shaped region varies from a minimum, in the upper part, comprised between 0.76 and 0.86 mm and a maximum, in the lower part, comprised between 1.25 and 1.34 mm.

The thickness of the closing wall 14 is comprised between 0.75 mm and 0.8 mm.

The taper of the external surface 13a (angle α) of the longitudinally extended body 3 is comprised between 78° and 80° while the taper of the internal surface 13b (angle β) of the longitudinally extended body 3 is comprised between 80° and 82°.

Between the neck portion 2a and the flanged portion 2b, there is an angle equal to 90°.

According to a ninth embodiment shown in cross-section in Figure 9, the cup-shaped body 1 has a weight comprised between 6.05 g and 6.15 g; the diameter of the mouth 2 is comprised between 60 mm and 63 mm, while the diameter of the lower end of the frustum-shaped region is comprised between 28 mm and 32 mm.

The height H is comprised between 22 and 25 mm. The thickness of the flanged portion 2b is comprised between 0.8 mm and 1 mm and the thickness of the neck portion 2a is comprised between 0.6 mm and 0.7 mm.

The thickness of the longitudinally extended body 3 in the conical or frustum-shaped region varies from a minimum, in the upper part, comprised between 0.9 and 0.95 mm and a maximum, in the lower part, comprised between 1.25 and 1.35 mm.

The thickness of the closing wall 14 is comprised between 0.75 mm and 0.81 mm.

The taper of the external surface 13a (angle α) of the longitudinally extended body 3 is comprised between 78° and 79.5° while the taper of the internal surface 13b (angle β) of the longitudinally extended body 3 is comprised between 82° and 83.5°.

Between the neck portion 2a and the flanged portion 2b, there is an angle equal to 90°.

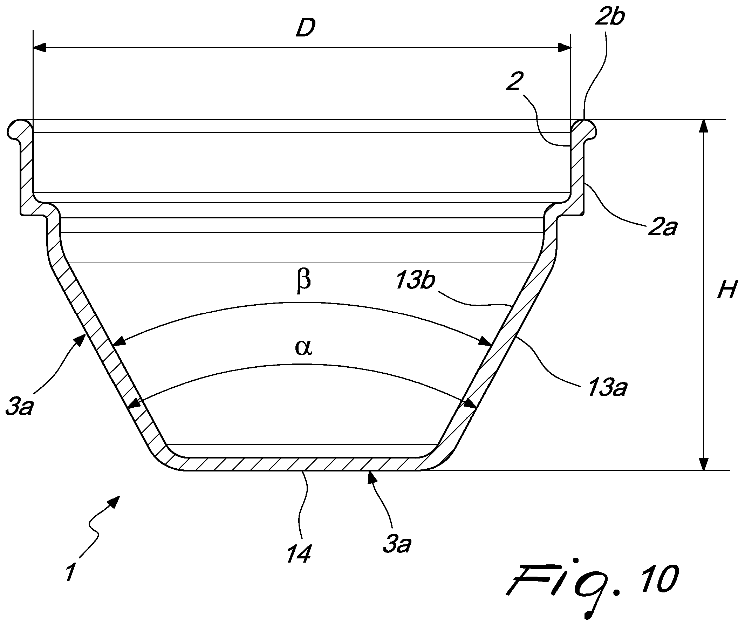

According to a tenth embodiment shown in cross-section in Figure 10, the cup-shaped body 1 has a weight comprised between 5.8 g and 6 g; the diameter of the mouth 2 is comprised between 40 mm and 44 mm, while the diameter of the lower end of the frustum-shaped region is comprised between 21 mm and 23 mm.

The height H is comprised between 26 and 29 mm. The thickness of the flanged portion 2b is comprised between 0.7 mm and 0.9 mm and the thickness of the neck portion 2a is comprised between 0.8 mm and 1 mm.

The thickness of the longitudinally extended body 3 in the conical or frustum-shaped region varies from a minimum, in the upper part, comprised between 0.9 and 1.1 mm and a maximum, in the lower part, comprised between 1.25 and 1.35 mm.

The thickness of the closing wall 14 is comprised between 0.9 mm and 1.1 mm.

The taper of the external surface 13a (angle α) of the longitudinally extended body 3 is comprised between 55° and 58° while the taper of the internal surface 13b (angle β) of the longitudinally extended body 3 is comprised between 55° and 58°.

Between the neck portion 2a and the flanged portion 2b, there is an angle equal to 90°.

According to an eleventh embodiment shown in cross-section in Figure 11, the cup-shaped body 1 has a weight comprised between 3.5 g and 4.5 g; the diameter of the mouth 2 is comprised between 25 mm and 30 mm, while the diameter of the lower end of the frustum-shaped region is comprised between 9 mm and 11 mm.

The height H is comprised between 41 and 47 mm. The thickness of the flanged portion 2b is comprised between 0.8 mm and 0.9 mm and the thickness of the neck portion 2a is comprised between 0.8 mm and 0.9 mm.

The thickness of the longitudinally extended body 3 in the conical or frustum-shaped region varies from a minimum, in the upper part, comprised between 1 mm and 1.10 mm and a maximum, in the lower part, comprised between 1.15 and 1.2 mm.

The thickness of the closing wall 14 is comprised between 0.85 mm and 0.95 mm.

The taper of the external surface 13a (angle α) of the longitudinally extended body 3 is comprised between 27° and 29° while the taper of the internal surface 13b (angle β) of the longitudinally extended body 3 is comprised between 27.5° and 29.5°.

Between the neck portion 2a and the flanged portion 2b, there is an angle equal to 90°.

According to a further aspect, the present invention relates to a method for manufacturing a cup-shaped body 1.

In particular, the method according to the invention comprises a step of compression molding of a polymeric material.

The cup-shaped body 1 has an axis of longitudinal extension 100 and defines a mouth 2 and a longitudinally extended body 3 which is closed at the opposite end 3a from the mouth 2.

The longitudinally extended body 3 has a conical or frustum-like extension with a diameter that increases progressively from the opposite end 3a toward the mouth 2; the cup-shaped body 1 has a height extension H measured between the mouth 2 and the opposite end 3a; the mouth 2 has a circular shape with a diameter D.

Specifically:
- the ratio between H and D is comprised between 0.35 and 1.65; and
- the ratio between D, measured in millimeters, and the average taper (Cmedia), measured in degrees (°), D/Cmedia, is comprised between 0.5 and 1.

By "average taper" is meant is the arithmetic mean between the taper (angle α) of the external surface 13a of the preform body 3 and the taper (angle β) of the internal surface 13b of the preform body 3.

With reference to a first, particularly important aspect, the cup-shaped bodies 1, shown in Figures 1 to 5 and 7 to 8, the cup-shaped bodies 1 have:
- the ratio between H and D is comprised between 0.36 and 0.40; and
- the ratio between D, measured in millimeters, and the average taper (Cmedia), measured in degrees (°), D/Cmedia, is comprised between 0.5 and 0.9.

It has been found to be extremely advantageous to have the ratio between H and D be comprised between 0.37 and 0.39, and to have the D/Cmedia ratio comprised between 0.54 and 0.80.

According to a further aspect, the cup-shaped body **1,** as shown in Figures 6 and from Figures 9 to 10, has the following characteristics:
- the ratio between H and D is comprised between 0.50 and 0.70; and
- the ratio between D, measured in millimeters, and the average taper (Cmedia), measured in degrees (°), D/Cmedia, is comprised between 0.6 and 0.95.

It has been found to be extremely advantageous to have the ratio between H and D be comprised between 0.53 and 0.67, and to have the D/Cmedia ratio comprised between 0.65 and 0.90.

According to a further aspect of the present invention, the cup-shaped body 1, shown in Figure 11, has the following characteristics:
- the ratio between H and D is comprised between 1.4 and 1.7; and
- the ratio between D, measured in millimeters, and the average taper (Cmedia), measured in degrees (°), D/Cmedia, is comprised between 0.9 and 1.

It has been found to be extremely advantageous to have the ratio between H and D be comprised between 1.45 and 1.65, and to have the D/Cmedia ratio comprised between 0.94 and 0.96.

The cup-shaped body 1 obtained or obtainable according to such method has the characteristics described in the part containing the description of the cup-shaped body 1.

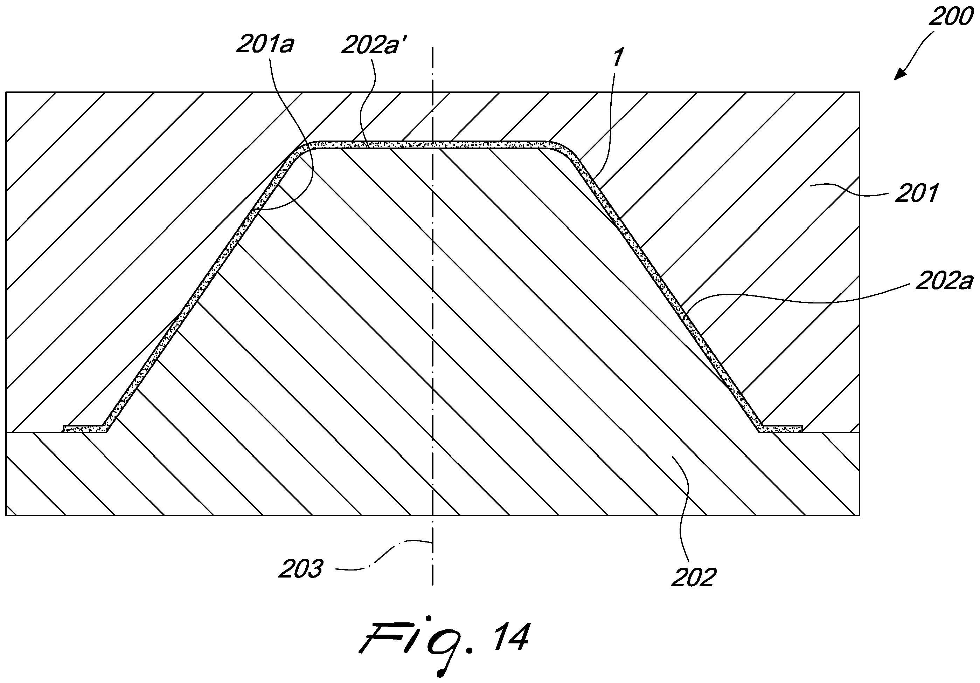

The mold 200, used in the method according to the invention, comprises a mold body 201 and a male plug 202, which can move with respect to each other along a mutual movement direction 203 that is substantially parallel to the axis of longitudinal extension 100 of the cup-shaped body 1 between a spaced-apart position, which allows the molten material 300 to be fed in, and a closed or brought-together position (shown in Figure 14), in which the mold body 201 and the male plug 202 define, between the respective facing surfaces 201a and 202a, an interspace corresponding to the cup-shaped body 1 to be printed.

Conveniently, according to a preferred embodiment, the mold body 201 is arranged above the male plug 202 so that its surface 201a is directed downward.

The surface 202a of the male plug 202, in turn directed upward, defines a substantially flat region 202a', which is intended to provide at least one portion of the bottom of the cup-shaped body 1.

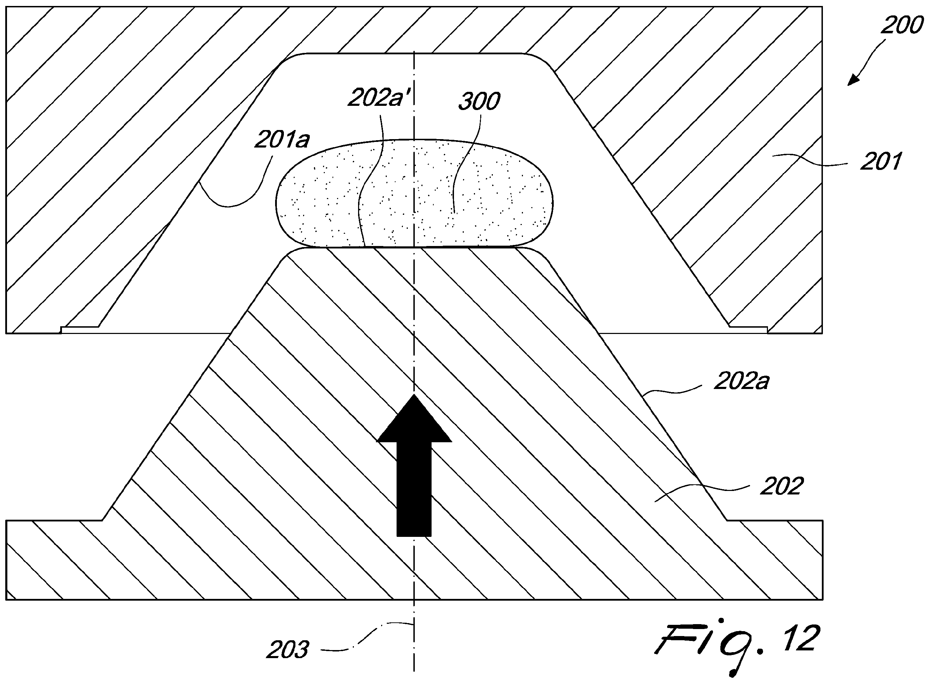

Advantageously, the method according to the invention entails a step of depositing the molten material 300 (Figure 12) at a resting region, preferably substantially flat 202a', of the male plug 202.

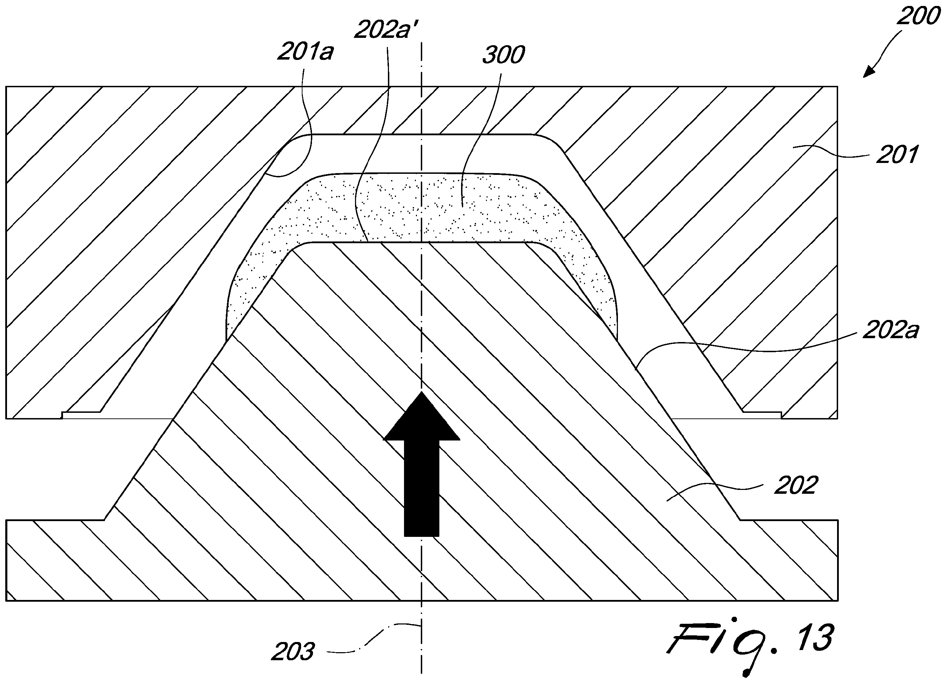

This enables a better centering of the molten material 300 to be molded, which, following the relative movement between the mold body 201 and the male plug 202, or by virtue of gravity, settles on the respective inclined "sides" (as shown in the schematic cross-section of Figure 13), so that when the actual step of molding begins, the molten material 30 has already assumed an advantageous shape (in cross-section diametrical substantially U-shaped upturned).

The use of the cup-shaped body 1 is varied: for example, the cup-shaped body 1 can comprise a finished body, or a so-called "preform", designed to be subsequently molded using blow molding.

In practice it has been found that the invention fully achieves the intended aim and objects by providing a cup-shaped body 1 with more or less pronounced taper which, by virtue of the particular ratios between the diameter of the mouth and the height and between the diameter of the mouth and the average taper, makes it possible, including using compression molding, to obtain cup-shaped bodies that are extremely light and which conform to the required standards.

In particular, specifying that the cup-shaped bodies 1, with the ratio between diameter and height in the specified range, have the indicated taper, makes it possible to obtain, even during the entire compression molding operation, a thickness relative to the passage cross-section that is appreciably greater than the passage cross-sections that would be had with cup-shaped bodies with a lower taper than that described.

Furthermore, with the taper envisaged in the present invention, for the same outside diameter and height, a shorter path is obtained for the material to be molded, thus making it possible to exert a lower pressure and therefore, as a consequence, the molding force necessary for the process will be appreciably lower.

It should further be noted that polymeric materials used for the manufacture of the cup-shaped bodies 1 according to the invention typically have a behavior whereby the viscosity is not constant but is a function of the deformation speed and, in particular, it decreases with the increase in the deformation speed.

For this reason, it is not immediate and direct that as the deformation speed increases the force also increases, because, by contrast, the viscosity decreases.

However, for the materials in question, it is always found that the decrease in viscosity with the increase in deformation speed does not outweigh the increase in the deformation speed, and so the force increases as the deformation speed increases.

As a consequence of this, by using the geometries and the tapers described in this patent application, a greater taper determines slower deformation speed and therefore lower forces on the material.

In practice, as described above, the molding force depends on the viscosity of the polymer, and so it is a function of the temperature of the polymer and therefore it depends on how rapidly the polymer cools during the step of molding. For slender thicknesses cooling is faster, and so the polymer is on average more viscous, if the other conditions remain unchanged. In conclusion, in geometries with greater taper this effect is less and therefore the molding force will also be less.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

## Claims

1. A cup-shaped body (1) of the type obtained by compression molding ofa polymeric material, which has an axis of longitudinal extension (100) and defines a mouth (2) and a longitudinally-extended body (3) which is closed at the opposite end (3a) from said mouth (2), said longitudinally-extended body (3) having a conical or frustum-like extension with a diameter that increases progressively from said opposite end (3a) toward said mouth (2), said cup-shaped body (1) having a height extension (H) measured between said mouth (2) and said opposite end (3a), and said mouth (2) having a circular shape with a diameter (D), **characterized in that**:
- the ratio between H and D is comprised between 0.35 and 1.65; and
- the ratio between D, measured in millimeters, and the average taper (Cmedia), measured in degrees (°), between the taper of the external surface (13a) of the longitudinally-extended body (3) and the taper of the internal surface (13b) of the longitudinally-extended body (3), D/Cmedia, is comprised between 0.5 and 1.

2. The cup-shaped body (1) according to claim 1, **characterized in that**:
- the ratio between H and D is comprised between 0.50 and 0.70; and
- the ratio between D, measured in millimeters, and the average taper (Cmedia), measured in degrees (°), D/Cmedia, is comprised between 0.6 and 0.95.

3. The cup-shaped body (1) according to claim 1, **characterized in that**:
- the ratio between H and D is comprised between 1.4 and 1.7; and
- the ratio between D, measured in millimeters, and the average taper (Cmedia), measured in degrees (°), D/Cmedia, is comprised between 0.9 and 1.

4. The cup-shaped body (1) according to claim 2, **characterized in that**:
- the ratio between H and D is comprised between 0.53 and 0.67; and
- the D/Cmedia ratio is comprised between 0.65 and 0.90.

5. The cup-shaped body (1) according to claim 3, **characterized in that**:
- the ratio between H and D is comprised between 1.45 and 1.65; and
- the D/Cmedia ratio is comprised between 0.94 and 0.96.

6. The cup-shaped body (1) according to claim 1, **characterized in that**:
- the ratio between H and D is comprised between 0.36 and 0.40; and
- the ratio between D, measured in millimeters, and the average taper (Cmedia), measured in degrees (°), between the taper of the external surface (13a) of the longitudinally-extended body (3) and the taper of the internal surface (13b) of the longitudinally-extended body (3), D/Cmedia, is comprised between 0.5 and 0.9.

7. The cup-shaped body (1) according to claim 6, **characterized in that**:
- the ratio between H and D is comprised between 0.37 and 0.39; and
- the ratio between D, measured in millimeters, and the average taper (Cmedia), measured in degrees (°), D/Cmedia, is comprised between 0.4 and 0.9.

8. The cup-shaped body (1) according to one or more of the preceding claims, **characterized in that** the weight in grams of said cup-shaped body (1) is comprised between 3.5 and 9.

9. The cup-shaped body (1) according to one or more of the preceding claims, **characterized in that** it comprises, at said mouth (2), a neck portion (2a) which is blended with a flanged portion (2b) which extends outward, said flanged portion (2b) extending on a plane that is perpendicular to said neck portion (2a).

10. The cup-shaped body (1) according to one or more of the preceding claims, **characterized in that** said opposite end (3a) of said cup-shaped body (1) has a flat or rounded closing wall (14).

11. The cup-shaped body (1) according to one or more of the preceding claims, **characterized in that** the thickness of said closing wall (14) is comprised between 0.5 mm and 1.2 mm, preferably between 0.8 mm and 1 mm.

12. The cup-shaped body (1) according to one or more of the preceding claims, **characterized in that** the thickness of said longitudinally-extended body (3) with a conical extension is comprised between 0.6 mm and 1.5 mm, preferably between 0.66 mm at the region arranged proximate to said mouth (2), and 1.44 mm at the region located proximate to said opposite end (3a).

13. The cup-shaped body (1) according to one or more of the preceding claims, **characterized in that** it comprises a preform for manufacturing plastic containers.

14. A method for manufacturing a cup-shaped body (1), **characterized in that** it comprises a step of compression molding of a polymeric material, said cup-shaped body (1) having an axis of longitudinal extension (100) and defining a mouth (2) and a longitudinally-extended body (3) which is closed at the opposite end (3a) from said mouth (2), said preform body (3) having a conical or frustum-like extension with a diameter that increases progressively from said opposite end (3a) toward said mouth (2), said cup-shaped body (1) having a height extension (H) measured between said mouth (2) and said opposite end (3a), and said mouth (2) having a circular shape with a diameter (D);
- the H/D ratio is comprised between 0.35 and 0.70; and
- the ratio between D, measured in millimeters, and the average taper (Cmedia), measured in degrees (°), between the taper of the external surface (13a) of the preform body (3) and the taper of the internal surface (13b) of the preform body (3) (D/Cmedia), is comprised between 0.5 and 1.

15. The method for manufacturing a cup-shaped body (1) according to claim 14, **characterized in that**:
- the H/D ratio is comprised between 0.36 and 0.40; and
- the ratio between D, measured in millimeters, and the average taper (Cmedia), measured in degrees (°), between the taper of the external surface (13a) of the preform body (3) and the taper of the internal surface (13b) of the preform body (3) (D/Cmedia), is comprised between 0.5 and 0.9.

16. The method for manufacturing a cup-shaped body (1) according to one or more of claims 14 to 15, **characterized in that** said cup-shaped body (1) has at least one characteristic that is present in one or more of claims 2 to 13.

17. The method for manufacturing a cup-shaped body (1) according to one or more of claims 14 to 16, **characterized in that** said molding step comprises a step of feeding molten material (300) between a mold body (201) and a male plug (202), which can move with respect to each other along a mutual movement direction (203) that is substantially parallel to the axis of longitudinal extension (100) of said cup-shaped body (1).

18. The method for manufacturing a cup-shaped body (1) according to one or more of claims 14 to 17, **characterized in that** said mold body (201) is arranged above said male plug (202).

19. The method for manufacturing a cup-shaped body (1) according to claim 18, **characterized in that** said male plug defines a resting region (202a'), preferably substantially flat, which is designed to provide the bottom of the cup-shaped body (1), said feeding step comprising a step of depositing molten material (300) at said resting region (202a') of said male plug (202).

20. The method for manufacturing a cup-shaped body (1) according to one or more of claims 14 to 19, **characterized in that** it comprises, after said step of depositing the molten material (300) at said resting region, a step of sliding at least one portion of said molten material (300) along the inclined "sides" of said male plug (202).

## Patentansprüche

1. Ein becherförmiger Körper (1) von der Art, die durch Formpressen eines Polymermaterials hergestellt wird; welcher eine Achse der Längsausdehnung (100) hat und einen Ausguss (2) und einen sich in Längsrichtung erstreckenden Körper (3) bestimmt, welcher an dem dem Ausguss (2) gegenüberliegenden Ende (3a) geschlossen ist; wobei der sich in Längsrichtung erstreckende Körper (3) eine kegelförmige oder kegelstumpfförmige Ausdehnung mit einem Durchmesser hat, der sich von dem gegenüberliegenden Ende (3a) zu dem Ausguss (2) hin zunehmend vergrößert; wobei der becherförmige Körper (1) eine Höhenausdehnung (H) hat, die zwischen dem Ausguss (2) und dem gegenüberliegenden Ende (3a) gemessen wird, und der Ausguss (2) eine Kreisform mit einem Durchmesser (D) hat, **dadurch gekennzeichnet, dass**
- das Verhältnis zwischen H und D zwischen 0,35 und 1,65 beträgt und
- das Verhältnis zwischen D, gemessen in Millimetern, und der mittleren Verjüngung (Cmedia), gemessen in Grad (°), zwischen der Verjüngung der äußeren Oberfläche (13a) des sich in Längsrichtung erstreckenden Körpers (3) und der Verjüngung der inneren Oberfläche (13b) des sich in Längsrichtung erstreckenden Körpers (3), D/Cmedia, zwischen 0,5 und 1 beträgt.

2. Der becherförmige Körper (1) gemäß Anspruch 1, **dadurch gekennzeichnet, dass**
- das Verhältnis zwischen H und D zwischen 0,50 und 0,70 beträgt und
- das Verhältnis zwischen D, gemessen in Millimetern, und der mittleren Verjüngung (Cmedia), gemessen in Grad (°), D/Cmedia, zwischen 0,6 und 0,95 beträgt.

3. Der becherförmige Körper (1) gemäß Anspruch 1, **dadurch gekennzeichnet, dass**
- das Verhältnis zwischen H und D zwischen 1,4 und 1,7 beträgt und
- das Verhältnis zwischen D, gemessen in Millimetern, und der durchschnittlichen Verjüngung (Cmedia), gemessen in Grad (°), D/Cmedia, zwischen 0,9 und 1 beträgt.

4. Der becherförmige Körper (1) gemäß Anspruch 2, **dadurch gekennzeichnet, dass**
- das Verhältnis zwischen H und D zwischen 0,53 und 0,67 beträgt und
- das D/Cmedia-Verhältnis zwischen 0,65 und 0,90 beträgt.

5. Der becherförmige Körper (1) gemäß Anspruch 3, **dadurch gekennzeichnet, dass**
- das Verhältnis zwischen H und D zwischen 1,45 und 1,65 beträgt und
- das D/Cmedia-Verhältnis zwischen 0,94 und 0,96 beträgt.

6. Der becherförmige Körper (1) gemäß Anspruch 1, **dadurch gekennzeichnet, dass**
- das Verhältnis zwischen H und D zwischen 0,36 und 0,40 beträgt und
- das Verhältnis zwischen D, gemessen in Millimetern, und der mittleren Verjüngung (Cmedia), gemessen in Grad (°), zwischen der Verjüngung der äußeren Oberfläche (13a) des sich in Längsrichtung erstreckenden Körpers (3) und der Verjüngung der inneren Oberfläche (13b) des sich in Längsrichtung erstreckenden Körpers (3), D/Cmedia, zwischen 0,5 und 0,9 beträgt.

7. Der becherförmige Körper (1) gemäß Anspruch 6, **dadurch gekennzeichnet, dass**
- das Verhältnis zwischen H und D zwischen 0,37 und 0,39 beträgt und
- das Verhältnis zwischen D, gemessen in Millimetern, und der mittleren Verjüngung (Cmedia), gemessen in Grad (°), D/Cmedia, zwischen 0,4 und 0,9 beträgt.

8. Der becherförmige Körper (1) gemäß einem oder mehreren der obigen Ansprüche, **dadurch gekennzeichnet, dass** das Gewicht des becherförmigen Körpers (1) in Gramm zwischen 3,5 und 9 beträgt.

9. Der becherförmige Körper (1) gemäß einem oder mehreren der obigen Ansprüche, **dadurch gekennzeichnet, dass** er an dem Ausguss (2) einen Halsabschnitt (2a) umfasst, welcher in einen geflanschten Abschnitt (2b) übergeht, der sich nach außen erstreckt; wobei der geflanschte Abschnitt (2b) sich auf einer Ebene erstreckt, die senkrecht zu dem Halsabschnitt (2a) ist.

10. Der becherförmige Körper (1) gemäß einem oder mehreren der obigen Ansprüche, **dadurch gekennzeichnet, dass** das gegenüberliegende Ende (3a) des becherförmigen Körpers (1) eine flache oder gerundete Abschlusswand (14) hat.

11. Der becherförmige Körper (1) gemäß einem oder mehreren der obigen Ansprüche, **dadurch gekennzeichnet, dass** die Dicke der Abschlusswand (14) zwischen 0,5 mm und 1,2 mm, vorzugsweise zwischen 0,8 mm und 1 mm, beträgt.

12. Der becherförmige Körper (1) gemäß einem oder mehreren der obigen Ansprüche, **dadurch gekennzeichnet, dass** die Dicke des sich in Längsrichtung erstreckenden Körpers (3) mit einer kegelförmigen Ausdehnung zwischen 0,6 mm und 1,5 mm, vorzugsweise zwischen 0,66 mm in dem Bereich nahe dem Ausguss (2) und 1,44 mm in dem Bereich nahe dem gegenüberliegenden Ende (3a), beträgt.

13. Der becherförmige Körper (1) gemäß einem oder mehreren der obigen Ansprüche, **dadurch gekennzeichnet, dass** er einen Rohling zur Herstellung von Kunststoffbehältern umfasst.

14. Ein Verfahren zur Herstellung eines becherförmigen Körpers (1), **dadurch gekennzeichnet, dass** es einen Schritt des Formpressens eines Polymermaterials umfasst, wobei der becherförmige Körper (1) eine Achse der Längsausdehnung (100) hat und einen Ausguss (2) und einen sich in Längsrichtung (3) erstreckenden Körper (3) bestimmt, welcher an dem dem Ausguss (2) gegenüberliegenden Ende (3a) verschlossen ist; wobei der Rohlingskörper (3) eine kegelförmige oder kegelstumpfähnliche Erstreckung mit einem Durchmesser hat, der sich von dem gegenüberliegenden Ende (3a) zu dem Ausguss (2) hin zunehmend vergrößert, wobei der becherförmige Körper (1) eine Höhenausdehnung (H) hat, die zwischen dem Ausguss (2) und dem gegenüberliegenden Ende (3a) gemessen wird, und der Ausguss (2) eine Kreisform mit einem Durchmesser (D) hat;
- das H/D-Verhältnis zwischen 0,35 und 0,70 beträgt und
- das Verhältnis zwischen D, gemessen in Millimetern, und der mittleren Verjüngung (Cmedia), gemessen in Grad (°), zwischen der Verjüngung der äußeren Oberfläche (13a) des Rohlingskörpers (3) und der Verjüngung der inneren Oberfläche (13b) des Rohlingskörpers (3) (D/Cmedia), zwischen 0,5 und 1 beträgt.

15. Das Verfahren zur Herstellung eines becherförmigen Körpers (1) gemäß Anspruch 14, **dadurch gekennzeichnet, dass**
- das H/D-Verhältnis zwischen 0,36 und 0,40 beträgt und
- das Verhältnis zwischen D, gemessen in Millimetern, und der mittleren Verjüngung (Cmedia), gemessen in Grad (°), zwischen der Verjüngung der äußeren Oberfläche (13a) des Rohlingskörpers (3) und der Verjüngung der inneren Oberfläche (13b) des Rohlingskörpers (3) (D/Cmedia), zwischen 0,5 und 0,9 beträgt.

16. Das Verfahren zur Herstellung eines becherförmigen Körpers (1) gemäß einem oder mehreren der Ansprüche 14 bis 15, **dadurch gekennzeichnet, dass** der becherförmige Körper (1) mindestens eine Eigenschaft hat, die in einem oder mehreren der Ansprüche 2 bis 13 vorhanden ist.

17. Das Verfahren zur Herstellung eines becherförmigen Körpers (1) gemäß einem oder mehreren der Ansprüche 14 bis 16, **dadurch gekennzeichnet, dass** der Formschritt einen Schritt des Zuführens geschmolzenen Materials (300) zwischen einem Formkörper (201) und einem Stempel (202) umfasst, die sich im Verhältnis zueinander entlang einer Bewegungsrichtung (203) zueinander bewegen können, welche im Wesentlichen parallel zur Achse der Längsausdehnung (100) des becherförmigen Körpers (1) ist.

18. Das Verfahren zur Herstellung eines becherförmigen Körpers (1) gemäß einem oder mehreren der Ansprüche 14 bis 17, **dadurch gekennzeichnet, dass** der Formkörper (201) oberhalb des Stempels (202) angeordnet ist.

19. Das Verfahren zur Herstellung eines becherförmigen Körpers (1) gemäß Anspruch 18, **dadurch gekennzeichnet, dass** der Stempel einen im Wesentlichen flachen Auflagebereich (202a') bestimmt, der dazu dient, den Boden des becherförmigen Körpers (1) zu bilden, wobei der Zuführschritt einen Schritt des Ablagerns von geschmolzenem Material (300) an dem Auflagebereich (202a') des Stempels (202) umfasst.

20. Das Verfahren zur Herstellung eines becherförmigen Körpers (1) gemäß einem oder mehreren der Ansprüche 14 bis 19, **dadurch gekennzeichnet, dass** es nach dem Schritt des Ablagerns des geschmolzenen Materials (300) an dem Auflagebereich einen Schritt des Schiebens mindestens eines Teils des geschmolzenen Materials (300) entlang der schrägen "Seiten" des Stempels (202) umfasst.

## Revendications

1. Corps en forme de coupelle (1) du type obtenu par moulage par compression d'un matériau polymère, qui présente un axe d'extension longitudinale (100) et définit une embouchure (2) et un corps allongé longitudinalement (3) qui est fermé à l'extrémité opposée (3a) à ladite embouchure (2), ledit corps allongé longitudinalement (3) ayant une extension conique ou tronconique avec un diamètre qui augmente progressivement depuis ladite extrémité opposée (3a) vers ladite embouchure (2), ledit corps en forme de coupelle (1) ayant une extension en hauteur (H) mesurée entre ladite embouchure (2) et ladite extrémité opposée (3a), et ladite embouchure (2) ayant une forme circulaire avec un diamètre (D), **caractérisé en ce que**:
- le rapport entre H et D est compris entre 0,35 et 1,65 ; et
- le rapport entre D, mesuré en millimètres, et la conicité moyenne (Cmedia), mesurée en degrés (°), entre la conicité de la surface externe (13a) du corps allongé longitudinalement (3) et la conicité de la surface interne (13b) du corps allongé longitudinalement (3), D/Cmedia, est compris entre 0,5 et 1.

2. Corps en forme de coupelle (1) selon la revendication 1, **caractérisé en ce que** :
- le rapport entre H et D est compris entre 0,50 et 0,70 ; et
- le rapport entre D, mesuré en millimètres, et la conicité moyenne (Cmedia), mesurée en degrés (°), D/Cmedia, est compris entre 0,6 et 0,95.

3. Corps en forme de coupelle (1) selon la revendication 1, **caractérisé en ce que** :
- le rapport entre H et D est compris entre 1,4 et 1,7 ; et
- le rapport entre D, mesuré en millimètres, et la conicité moyenne (Cmedia), mesurée en degrés (°), D/Cmedia, est compris entre 0,9 et 1.

4. Corps en forme de coupelle (1) selon la revendication 2, **caractérisé en ce que** :
- le rapport entre H et D est compris entre 0,53 et 0,67 ; et
- le rapport D/Cmedia est compris entre 0,65 et 0,90.

5. Corps en forme de coupelle (1) selon la revendication 3, **caractérisé en ce que** :
- le rapport entre H et D est compris entre 1,45 et 1,65 ; et
- le rapport D/Cmedia est compris entre 0,94 et 0,96.

6. Corps en forme de coupelle (1) selon la revendication 1, **caractérisé en ce que** :
- le rapport entre H et D est compris entre 0,36 et 0,40 ; et
- le rapport entre D, mesuré en millimètres, et la conicité moyenne (Cmedia), mesurée en degrés (°), entre la conicité de la surface externe (13a) du corps allongé longitudinalement (3) et la conicité de la surface interne (13b) du corps allongé longitudinalement (3), D/Cmedia, est compris entre 0,5 et 0,9.

7. Corps en forme de coupelle (1) selon la revendication 6, **caractérisé en ce que** :
- le rapport entre H et D est compris entre 0,37 et 0,39 ; et
- le rapport entre D, mesuré en millimètres, et la conicité moyenne (Cmedia), mesurée en degrés (°), D/Cmedia, est compris entre 0,4 et 0,9.

8. Corps en forme de coupelle (1) selon une ou plusieurs des revendications précédentes, **caractérisé en ce que** le poids en grammes dudit corps en forme de coupelle (1) est compris entre 3,5 et 9.

9. Corps en forme de coupelle (1) selon une ou plusieurs des revendications précédentes, **caractérisé en ce qu'**il comprend, au niveau de ladite embouchure (2), une partie formant col (2a) qui se fond dans une partie à rebord (2b) qui s'étend vers l'extérieur, ladite partie à rebord (2b) s'étendant dans un plan perpendiculaire à ladite partie formant col (2a).

10. Corps en forme de coupelle (1) selon une ou plusieurs des revendications précédentes, **caractérisé en ce que** ladite extrémité opposée (3a) dudit corps en forme de coupelle (1) présente une paroi de fermeture plate ou arrondie (14).

11. Corps en forme de coupelle (1) selon une ou plusieurs des revendications précédentes, **caractérisé en ce que** l'épaisseur de ladite paroi de fermeture (14) est comprise entre 0,5 mm et 1,2 mm, de préférence entre 0,8 mm et 1 mm.

12. Corps en forme de coupelle (1) selon une ou plusieurs des revendications précédentes, **caractérisé en ce que** l'épaisseur dudit corps allongé longitudinalement (3) avec une extension conique est comprise entre 0,6 mm et 1,5 mm, de préférence entre 0,66 mm dans la région disposée à proximité de ladite embouchure (2) et 1,44 mm dans la région située à proximité de ladite extrémité opposée (3a).

13. Corps en forme de coupelle (1) selon une ou plusieurs des revendications précédentes, **caractérisé en ce qu'**il comprend une préforme pour la fabrication de récipients en plastique.

14. Procédé de fabrication d'un corps en forme de coupelle (1), **caractérisé en ce qu'**il comprend une étape de moulage par compression d'un matériau polymère, ledit corps en forme de coupelle (1) ayant un axe d'extension longitudinale (100) et définissant une embouchure (2) et un corps allongé longitudinalement (3) qui est fermé à l'extrémité opposée (3a) à ladite embouchure (2), ledit corps de préforme (3) ayant une extension conique ou tronconique avec un diamètre qui augmente progressivement depuis ladite extrémité opposée (3a) vers ladite embouchure (2), ledit corps en forme de coupelle (1) ayant une extension en hauteur (H) mesurée entre ladite embouchure (2) et ladite extrémité opposée (3a), et ladite embouchure (2) ayant une forme circulaire avec un diamètre (D) ;
- le rapport H/D est compris entre 0,35 et 0,70 ; et
- le rapport entre D, mesuré en millimètres, et la conicité moyenne (Cmedia), mesurée en degrés (°), entre la conicité de la surface externe (13a) du corps de préforme (3) et la conicité de la surface interne (13b) du corps de préforme (3) (D/Cmedia), est compris entre 0,5 et 1.

15. Procédé de fabrication d'un corps en forme de coupelle (1) selon la revendication 14, **caractérisé en ce que** :
- le rapport H/D est compris entre 0,36 et 0,40 ; et
- le rapport entre D, mesuré en millimètres, et la conicité moyenne (Cmedia), mesurée en degrés (°), entre la conicité de la surface externe (13a) du corps de préforme (3) et la conicité de la surface interne (13b) du corps de préforme (3) (D/Cmedia), est compris entre 0,5 et 0,9.

16. Procédé de fabrication d'un corps en forme de coupelle (1) selon une ou plusieurs des revendications 14 à 15, **caractérisé en ce que** ledit corps en forme de coupelle (1) présente au moins une caractéristique qui est présente dans une ou plusieurs des revendications 2 à 13.

17. Procédé de fabrication d'un corps en forme de coupelle (1) selon une ou plusieurs des revendications 14 à 16, **caractérisé en ce que** ladite étape de moulage comprend une étape d'alimentation en matière fondue (300) entre un corps de moule (201) et un bouchon mâle (202), qui peuvent se déplacer l'un par rapport à l'autre selon une direction de mouvement mutuel (203) qui est sensiblement parallèle à l'axe d'extension longitudinale (100) dudit corps en forme de coupelle (1).

18. Procédé de fabrication d'un corps en forme de coupelle (1) selon l'une ou plusieurs des revendications 14 à 17, **caractérisé en ce que** ledit corps de moule (201) est disposé au-dessus dudit bouchon mâle (202).

19. Procédé de fabrication d'un corps en forme de coupelle (1) selon la revendication 18, **caractérisé en ce que** ledit bouchon mâle définit une région de repos (202a'), de préférence sensiblement plate, qui est conçue pour former le fond du corps en forme de coupelle (1), ladite étape d'alimentation comprenant une étape consistant à déposer un matériau fondu (300) au niveau de ladite région de repos (202a') dudit bouchon mâle (202).

20. Procédé de fabrication d'un corps en forme de coupelle (1) selon une ou plusieurs des revendications 14 à 19, **caractérisé en ce qu'**il comprend, après ladite étape de dépôt du matériau fondu (300) au niveau de ladite zone de repos, une étape de glissement d'au moins une partie dudit matériau fondu (300) le long des « côtés » inclinés dudit bouchon mâle (202).
